(19) Europäisches Patentamt
European Patent Office
Office européen des brevets

(11) **EP 3 227 354 B1**

(12) **EUROPEAN PATENT SPECIFICATION**

(45) Date of publication and mention
of the grant of the patent:
**10.04.2019 Bulletin 2019/15**

(21) Application number: **15816676.9**

(22) Date of filing: **30.11.2015**

(51) Int Cl.:
*C08G 18/76* (2006.01)       *C08G 18/48* (2006.01)
*B29C 44/34* (2006.01)       *B29C 44/58* (2006.01)
*B29C 44/12* (2006.01)       *F25D 23/02* (2006.01)
*F25D 23/06* (2006.01)

(86) International application number:
**PCT/EP2015/078055**

(87) International publication number:
**WO 2016/087367 (09.06.2016 Gazette 2016/23)**

(54) **POLYMER MATERIAL FILLED COMPOSITE ELEMENT AND A PROCESS FOR PREPARING THE SAME**

MIT POLYMERSTOFF GEFÜLLTES KOMPOSITELEMENT UND VERFAHREN ZUR HERSTELLUNG DAVON

ÉLÉMENT COMPOSITE CHARGÉ DE MATIÈRE POLYMÈRE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.12.2014 CN 201410773100**

(43) Date of publication of application:
**11.10.2017 Bulletin 2017/41**

(73) Proprietor: **Covestro Deutschland AG**
**51373 Leverkusen (DE)**

(72) Inventors:
• **XI, Qiang**
**Shanghai 200000 (CN)**

• **GU, Henry**
**Shanghai 201210 (CN)**
• **ZHENG, Chunlei**
**Shanghai 200120 (CN)**

(74) Representative: **Levpat**
**c/o Covestro AG**
**Gebäude 4825**
**51365 Leverkusen (DE)**

(56) References cited:
**EP-A1- 1 400 770        DE-A1-102010 049 535**
**GB-A- 1 112 082        GB-A- 1 342 519**
**US-A1- 2012 297 813**

**Description**

**Technical Field**

The present invention is related to a process for preparing a polymer material filled composite element, wherein polyurethane foam is formed by *in situ* application of a polyurethane composition, such that the process for preparing polymer material filled composite element is improved. The present disclosure is also related to a polymer material filled composite element which is prepared by the aforementioned process.

**Background Art**

The term "polymer material filled composite element" means the composite elements having polymer material, such as polyurethane, polystyrene, foamed rubber, and foamed polyvinyl chloride, as its core material. These elements may serve functions such as thermal insulation, protection, and moisture-proof, among others, and are generally used as door body and tank body of refrigeration and insulation equipment.

Generally, the polymer material filled composite elements are prepared by injecting polymer material resin into a partially closed space, wherein issues including gas exhaustion and preventing resin overload accompanying the injection have to be settled. The conventional process involves setting prefabricated foam, such as polyurethane foam, around a place so that a partially closed space is formed; then injecting polymer resin into the space, in which step the polymer resin flows while exhausting the gas derived from said polymer resin per se as well as the gas existing in the cavity to the outside of the foam, and the flow stops once the polymer resin reaching the foam and being held back by the foam, thus forming a designed profile. The prefabricated foam has to be obtained through processes including formation, cutting/slicing, brown paper pasting, etc. After being delivered to working site, the prefabricated foam needs to be further segmented into predetermined shape(s), and then disposed around the space.

The conventional processes, which comprise numerous steps, are demanding in both labor and energy, and produce wastes such as brown paper, package, scrap, etc. during the processing. Therefore, it is desired to provide a novel method for preparing polymer material filled composite element.

**Summary**

In one aspect, the present invention provides a process for preparing a polymer material filled composite element, comprising the steps of:

i) providing a partially closed space, wherein a polyurethane foam is disposed at least at part of the periphery of the space to restrain the flow of the polymer material resin, and the polyurethane foam is formed by *in situ* application of a polyurethane composition and has an air flow value of greater than 1 L/min as determined by ASTM D3574 test;
ii) applying the polymer material resin into the space and curing the polymer material resin to form polymer material that fills the space;
wherein the polyurethane composition comprises:

A) an isocyanate component comprising one or more organic polyisocyanates;
B) an isocyanate-reactive component comprising:

b1) one or more polyether polyols having a hydroxyl value of 10 to 500 mg KOH/g and a functionality of 2 to 6; and
b2) one or more foaming agents.

In some preferred examples of this invention, the foaming agent is selected from water; more preferably, the content of the foaming agent is 2 to 30 % by weight, based on 100% by weight of the isocyanate-reactive component.

In further preferred examples of this invention, the polymer material is selected from the group consisting of polyurethane, polystyrene, foamed rubber, and foamed polyvinyl chloride.

In further preferred examples of this invention, the polyurethane foam has a density of 8 to 50 kg/m$^3$ as determined according to GB9891-1988.

In further preferred examples of this invention, the polymer material filled composite element is: door body, building insulation board, door body and tank body of a refrigeration and insulation equipment, tank body of a refrigeration vehicle, tank body of a refrigeration container, or insulation element of a refrigeration unit.

The present disclosure also relates to a polymer material filled composite element containing a space which is filled, at least in part, by one or more polymer material, and polyurethane foam is disposed at least at part of the periphery of the space, wherein said polyurethane foam is formed by *in situ* application of a polyurethane composition and has an air flow value of greater than 1 L/min as determined by ASTM D3574 test; and the polyurethane composition comprises:

A) an isocyanate component comprising one or more organic polyisocyanates;
B) an isocyanate-reactive component comprising:

b1) one or more polyether polyols having a hydroxyl value of 10 to 500 mg KOH/g and a functionality of 2 to 6; and
b2) one or more foaming agents.

In some preferred examples of this disclosure, the foaming agent is selected from water; more preferably, the content of the foaming agent is 2 to 30 % by weight, based on 100% by weight of the isocyanate-reactive component.

In further preferred examples of this disclosure, the polymer material is selected from the group consisting of polyurethane, polystyrene, foamed rubber, and foamed polyvinyl chloride.

In further preferred examples of this disclosure, the polyurethane foam has a density of 8 to 50 kg/m$^3$ as determined according to GB9891-1988.

In further preferred examples of this disclosure, the polymer material filled composite element is: door body, building insulation board, door body and tank body of a refrigeration and insulation equipment, tank body of a refrigeration vehicle, tank body of a refrigeration container, or insulation element of a refrigeration unit.

## Specific embodiments

In one aspect, the present invention provides a process for preparing a polymer material filled composite element, comprising the *in situ* formation of polyurethane foam at least at part of the periphery of a partially closed space. The *in situ* formed polyurethane foam allows gas exhaustion while restraining the flow of polymer resin, and possesses certain resilience, such that a simplified process and improved efficiency can be achieved simultaneously.

In some examples of this invention, the polymer material filled composite element is: door body, building insulation board, door body and tank body of a refrigeration and insulation equipment, tank body of a refrigeration vehicle, tank body of a refrigeration container, or insulation element of a refrigeration units.

The preparation process of the present invention comprises the steps of:

i) providing a partially closed space, wherein a polyurethane foam is disposed at least at part of the periphery of the space to restrain the flow of the polymer material resin, and the polyurethane foam is formed by *in situ* application of a polyurethane composition and has an air flow value of greater than 1 L/min as determined by ASTM D3574 test;
ii) applying the polymer material resin into the space and curing the polymer material resin to form the polymer material that fills the space.

In some examples of the present invention, said partially closed space can be of any shape, and has polyurethane foam disposed at least at one part of the periphery of the space. In some examples of the present invention, said space is a cuboid with the side walls and bottom thereof formed by plate material and its top side left open for the application of polymer material resin prior to the application of polymer material resin, and polyurethane foam is disposed at each seam. In another example of the present invention, said space is enclosed by multiple pieces of material having irregular shape, contains one or more ports for injecting the polymer material resin, and has polyurethane foam disposed at each seam adjoining the multiple material pieces having irregular shape.

Said polyurethane foam has a porous structure allowing gas exhaustion, possesses certain resilience and mechanical strength, and is capable of restraining the flow of the polymer material resin, such that the polymer material resin could be filled into the partially closed space without overflowing. Said polyurethane foam is formed by foaming and curing of a polyurethane composition *in situ* applied at the places where the flow of the polymer material resin shall be restrained. The polyurethane foam has an air flow value of greater than 1 L/min, preferably from 3 to 20 L/min determined according to ASTM D3574 test. In preferred examples of the present invention, the polyurethane foam has a density of 8 to 50 kg/m$^3$, preferably 10 to 30 kg/m$^3$ as determined according to GB9891-1988.

The polyurethane foam is formed by *in situ* application of a polyurethane composition, wherein the polyurethane composition comprises:

A) an isocyanate component comprising one or more organic polyisocyanates;
B) an isocyanate-reactive component comprising:

b1) one or more polyether polyols having a hydroxyl value of 10 to 500 mg KOH/g and a functionality of 2 to 6; and

b2) one or more foaming agents.

The organic polyisocyanates that can be used as component A) in the preparation of urethane foam include organic diisocyanates, which can be any aliphatic, alicyclic or aromatic isocyanate that is known to be useful for preparing polyurethane. Specific examples include but not limited to: 2,2'-, 2,4- and 4,4'-diphenylmethane diisocyanate; monomeric diphenylmethane diisocyanate and a mixture of homologs of diphenylmethane diisocyanate having more rings (polymeric MDI); isophorone diisocyanate or the oligomer thereof; toluene diisocyanate (TDI), such as toluene diisocyanate isomer, for example, 2,4-toluene diisocyanate, 2,6-toluene diisocyanate, and mixture thereof; tetramethylene diisocyanate or the oligomer thereof; hexamethylene diisocyanate (HDI) or the oligomer thereof; naphthalene diisocyanate (NDI) or mixture thereof.

In certain examples of the present invention, the organic polyisocyanate comprises isocyanates based on diphenylmethane diisocyanate, particularly, those comprising polymeric MDIs. Preferably, the organic polyisocyanate has a functionality of 1.9 to 3.5, and even more preferably, 2.0 to 2.8. Preferably, the organic polyisocyanate has a viscosity of 5 to 600 mPas, and even more preferably, 10 to 300 mPas, as determined at 25°C according to DIN 53019-1-3. The content of the isocyanate component can be 30 to 60% by weight, based on 100% by weight of the total weight of the polyurethane composition.

The organic polyisocyanates may also be used in the form of polyisocyanate pre-polymer. Such a polyisocyanate pre-polymer can be obtained by reacting an excessive amount of said organic polyisocyanates with a compound having at least two isocyanate-reactive groups under a temperature of, for example, 30 to 100°C, preferably, at about 80°C. Preferably, the polyisocyanate pre-polymer of the present invention has an NCO content of 20 to 33% by weight, more preferably, 25 to 32% by weight. Compounds having at least two isocyanate-reactive groups are well known in the art, for example, can be those described in Kunststoffhandbuch, Volume 7, Polyurethanes, Chapter 3.1, Carl Hanser-Verlag, 3rd ed., 1993.

In the present invention, the polyether polyols useful for component b1) are those having a hydroxyl value of 10 to 500 mg KOH/g, preferably 15-480 mg KOH/g, and a functionality of 2 to 6, preferably, 1.90 to 3.30. The content of the polyether polyol can be 30 to 70% by weight, based on 100% by weight of the total weight of the polyurethane composition.

Such polyether polyols may be prepared by any processes known in the art, for example, by the reaction between olefin oxide and initiator at the presence of a catalyst. Preferably, said catalyst is selected from, but not limited to, alkali hydroxide, alkali alkoxide, antimony pentachloride, boron fluoride etherate, or mixture thereof. Preferably, said olefin oxide is selected from, but not limited to, tetrahydrofuran, ethylene oxide, propylene oxide, 1,2-butylene oxide, 2,3-butylene oxide, styrene oxide, or mixture thereof, and is more preferably ethylene oxide and/or propylene oxide. Preferably, said initiator is selected from, but not limited to, polyhydroxy compound or polyamine compound; preferably, said polyhydroxy compound is selected from, but not limited to, water, ethylene glycol, 1,2-propanediol, 1,3-propanediol, diethylene glycol, trimethylolpropane, glycerol, bisphenol A, bisphenol S, or mixture thereof; preferably, said polyamine compound is selected from, but not limited to, ethylene diamine, propylene diamine, butylene diamine, hexamethylene diamine, diethylene triamine, toluene diamine, or mixture thereof. Furthermore, said polyether polyol can be unsaturated polyether polyol.

The polyurethane composition useful in the present invention may further comprises a foaming agent that may be selected from various physical foaming agent or chemical foaming agent, e.g., preferably, but not limited to, water, halogenated hydrocarbon, hydrocarbon compound, and gas. Preferably, said halogenated hydrocarbon is selected from, but not limited to, chlorodifluoromethane, dichlorofluoromethane, dichlorofluoromethane, trichloro-fluoromethane, or mixture thereof. Preferably, said hydrocarbon compound is selected from, but not limited to, butane, pentane, cyclopentane, hexane, cyclohexane, heptane, or mixture thereof. Preferably, said gas is selected from, but not limited to, air, $CO_2$, or $N_2$. More preferably, the foaming agent is water. In a preferred example of the present invention, the foaming agent is selected from water, and its content is 2 to 30% by weight, based on 100% by weight of the isocyanate-reactive component.

The polyurethane composition useful in the present invention may further comprise a foam stabilizer, preferably, a siloxane foam stabilizer. The amount of said foam stabilizer is about 0 to 10% by weight, preferably 0 to 3% by weight.

The polyurethane composition useful in the present invention may further comprise a catalyst. The catalyst is preferably, but not limited to, an amine catalyst, an organic metal catalyst, or a mixture thereof. The amine catalyst is preferably, but not limited to, triethylamine, tributylamine, triethylenediamine, N-ethylmorpholine, N,N,N',N'-tetramethyl-ethylenediamine, pentamethyl diethylenetriamine, N,N-methylaniline, N,N-dimethylaniline, or a mixture thereof. The organic metal catalyst is preferably, but not limited to, organotin compound, such as tin (II) acetate, tin (II) octoate, tin ethylhexanoate, tin laurate, dibutyltin oxide, dibutyltin dichloride, dibutyltin diacetate, dibutyltin maleate, dioctyltin diacetate, or a mixture thereof. The amount of said catalyst is 0.001 to 10% by weight, based on 100% by weight of the isocyanate-reactive component.

Depending on the particular requirement, a person skilled in the art may further include additional component(s), for example but not limited to auxiliary agent such as pore-forming agent, anti-aging agent, and colorant, into the polyurethane composition.

The ratio by weight between isocyanate component A) and isocyanate-reactive component B) within the polyurethane composition is characterized by a NCO index X, which is less than 100, preferably, less than 80, wherein said NCO index X is defined by the following equation:

$$X(\%) = \frac{[\text{the molar number of isocyanate groups (NCO groups) in component A}]}{[\text{the molar number of isocyanate reactive groups (NCO groups) in component B}]} \times 100\%$$

The process of the present invention further comprises a step ii) of applying the polymer material resin into the space and curing the polymer material resin to form a polymer material that fills the space.

The application of the polymer material resin may be preformed by way of casting, injection, or spraying as desired. For example, when the space is a cuboid with the top side thereof being open, the polymer material resin could be applied by casting; when the space has irregular shape, the polymer material resin could be injected through one or more injection ports.

In some examples of the present invention, the polymer material is selected from polyurethane, polystyrene, foamed rubber, and foamed polyvinyl chloride.

During the application of polymer material resin, the polyurethane foam disposed along the periphery of said space can restrain the flow of the polymer material resin, and prevent the overflowing thereof. Meanwhile, the polyurethane foam has a superior air flow property which allows the exhaustion of the gas from the space while preventing the wrapping of any bubble within the polymer material during the formation process. Once the space is full, the polymer material resin is cured to produce a polymer material and thus filling the space.

In some examples of the present invention, the polymer material filled composite element is selected from door body, building insulation board, the door body and tank body of the refrigeration and insulation equipment, the tank body of the refrigeration vehicles, the tank body of refrigeration container or the insulation elements of the refrigeration units.

The present disclosure is also related to a polymer material filled composite element containing a space that is filled, at least in part, by one or more polymer materials, wherein a polyurethane foam is disposed at least at part of the periphery of the space, said polyurethane foam is formed by *in situ* application of a polyurethane composition and has an air flow value of greater than 1 L/min determined according to ASTM D3574 test; wherein the polyurethane composition is as described above.

## Examples

The present invention is described in further detail with reference to the following examples. However, a person skilled in the art will understand that these examples are provided for illustrating the present invention, but shall not be construed as limiting the scope of the present invention.

The following commercial available products are used in the examples.

N210: a polyether polyol purchased from Zhongshan Chemical Plant of GPRO Group Co. Ltd. having a hydroxyl value of 100, a viscosity of 160, and a functionality of 2.0;
N303: a polyether polyol purchased from Zhongshan Chemical Plant of GPRO Group Co. Ltd. having a hydroxyl value of 475, a viscosity of 450, and a functionality of 3.0;
AK-8805: a foam stabilizer having an organic silicon content of 45 to 55 wt.%, purchased from Jiangsu Maysta Chemical Co., LTD.;
Dabco BL11: a catalyst for polyurethane synthesis, purchased from Air Products and Chemicals (China) Inc.;
Dabco 33LV: a catalyst for polyurethane synthesis, purchased from Air Products and Chemicals (China) Inc.;
Desomdur ® 44v20L: an isocyanate having a NCO content of 31.5% by weight, purchased from Bayer Material Science (China) AG.

A space for pre-foaming the polyurethane polymer material was assembled by using a galvanized aluminum plate as the base plate, steel plates as the lateral side plates with feeding port(s) in one of the lateral side plates, and ABS plate as the plate. During the assembling, a polyurethane composition as shown below in Table 1 was casted to the seams using a dual-component glue dispenser (Model DP 200-70-01, Shanghai OCAN Electronics Technology Co., Ltd.) with the feedstock temperature of 20°C, and the polyurethane was foamed into polyurethane foam. The formulation and properties of polyurethane composition 1 are shown in Table 1.

The polyurethane resin to be filled was subjected to high pressure foaming at a feedstock temperature of 20°C in a dual-component high pressure metering machine (HK650, Hennecke Machinery (Shanghai) Ltd.), and injected into the space for prefoaming to produce the polymer material filled composite element.

Once formed, the element was visually examined and tested. There is no overflowed material at the seams, and no bubble wrapped within the cured polyurethane, indicating that the gas exhaustion was unhindered.

Table 1: Polyurethane composition 1 and properties of the foam formed therefrom

| Component | Value | Unit |
|---|---|---|
| N210 | 30 | gram |
| N303 | 70 | gram |
| AK8805 | 2 | gram |
| BL11 | 1 | gram |
| 33LV | 2 | gram |
| Water | 13.5 | gram |
| 44V20L | 59.25 | gram |
| Density | 28.3 | kg/m$^3$ |
| Air flow value | 19 | L/min |

**Claims**

1. A process for preparing a polymer material filled composite element, comprising the steps of:

    i) providing a partially closed space, wherein a polyurethane foam is disposed at least at part of the periphery of the space to restrain the flow of a polymer material resin, and the polyurethane foam is formed by in situ application of a polyurethane composition and has an air flow value of greater than 1L/min as determined by ASTM D3574 test;
    ii) applying the polymer material resin into the space and curing the polymer material resin to form a polymer material that fills the space;

    wherein the polyurethane composition comprises:

    A) an isocyanate component comprising one or more organic polyisocyanates;
    B) an isocyanate-reactive component comprising:

        b1) one or more polyether polyols having a hydroxyl value of 10 to 500 mg KOH/g and a functionality of 2-6; and
        b2) one or more foaming agents.

2. The process according to claim 1, wherein the foaming agent is selected from water.

3. The process according to claim 2, wherein the foaming agent is present at a content of 2-30% by weight, based on 100% by weight of the isocyanate-reactive component.

4. The process according to claim 1, wherein the polymer material is selected from the group consisting of polyurethane, polystyrene, foamed rubber, and foamed polyvinyl chloride.

5. The process according to claim 1, wherein the polyurethane foam has a density of 8 - 50 kg/m$^3$ as determined according to GB9891-1988.

6. The process according to claim 1, wherein the polymer material filled composite element is: door body, building insulation board, door body and tank body of a refrigeration and insulation equipment, tank body of a refrigeration vehicle, tank body of a refrigeration container, or insulation element of a refrigeration unit.

## Patentansprüche

1. Verfahren zur Herstellung eines mit Polymermaterial gefüllten Verbundelements, das folgende Schritte umfasst:

   i) Bereitstellen eines teilweise geschlossenen Raums, wobei ein Polyurethanschaumstoff in mindestens einem Teil der Peripherie des Raums angeordnet ist, um den Strom eines Polymermaterialharzes zu beschränken, und der Polyurethanschaumstoff durch Applizieren einer Polyurethanzusammensetzung in situ gebildet wird und eine Luftdurchlässigkeit von mehr als 1 l/min gemäß der Prüfung nach ASTM D3574 aufweist;
   ii) Applizieren des Polymermaterialharzes in den Raum und Härten des Polymermaterialharzes zur Bildung eines Polymermaterials, das den Raum ausfüllt;

   wobei die Polyurethanzusammensetzung Folgendes umfasst:

   A) eine Isocyanat-Komponente, die ein oder mehrere organische Polyisocyanate umfasst;
   B) eine isocyanatreaktive Komponente, umfassend:

   b1) ein oder mehrere Polyetherpolyole mit einer Hydroxylzahl von 10 bis 500 mg KOH/g und einer Funktionalität von 2-6 und
   b2) ein oder mehrere Treibmittel.

2. Verfahren nach Anspruch 1, wobei das Treibmittel aus Wasser ausgewählt wird.

3. Verfahren nach Anspruch 2, wobei das Treibmittel in einem Gehalt von 2-30 Gew.-%, bezogen auf 100 Gew.-% der isocyanatreaktiven Komponente, vorliegt.

4. Verfahren nach Anspruch 1, wobei das Polymermaterial aus der Gruppe bestehend aus Polyurethan, Polystyrol, geschäumtem Kautschuk und geschäumtem Polyvinylchlorid ausgewählt wird.

5. Verfahren nach Anspruch 1, wobei der Polyurethanschaumstoff eine Dichte von 8-50 kg/m$^3$ gemäß GB9891-1988 aufweist.

6. Verfahren nach Anspruch 1, bei dem es sich bei dem mit Polymermaterial gefüllten Verbundelement um einen Türkörper, eine Gebäudedämmplatte, einen Türkörper und einen Tankkörper einer Kühl- und Isolierungsvorrichtung, einen Tankkörper eines Kühlfahrzeugs oder ein Isolierungselement einer Kühlanlage handelt.


## Revendications

1. Procédé de préparation d'un élément composite contenant une charge de matériau polymère, comprenant les étapes qui consistent à :

   i) fournir un espace partiellement fermé, une mousse de polyuréthane étant disposée sur au moins une partie de la périphérie de l'espace pour retenir l'écoulement d'une résine de matériau polymère, et la mousse de polyuréthane étant formée par l'application in situ d'une composition de polyuréthane et ayant une valeur de perméabilité à l'air supérieure à 1 l/min telle que déterminée par l'essai selon la méthode ASTM D3574 ;
   ii) appliquer la résine de matériau polymère dans l'espace et durcir la résine de matériau polymère pour former un matériau polymère qui remplit l'espace ;

   dans lequel la composition de polyuréthane comprend :

   A) un constituant isocyanate comprenant un ou plusieurs polyisocyanates organiques ;
   B) un constituant réagissant avec les isocyanates comprenant :

   b1) un ou plusieurs polyéthers polyols ayant un indice d'hydroxyle de 10 à 500 mg KOH/g et une fonctionnalité de 2 à 6 ; et
   b2) un ou plusieurs agents moussants.

2. Procédé selon la revendication 1, dans lequel l'agent moussant est sélectionné à partir de l'eau.

**3.** Procédé selon la revendication 2, dans lequel l'agent moussant est présent dans une quantité de 2 à 30 % en poids, relativement à 100 % en poids du constituant réagissant avec les isocyanates.

**4.** Procédé selon la revendication 1, dans lequel le matériau polymère est sélectionné dans le groupe constitué d'un polyuréthane, d'un polystyrène, d'une mousse de caoutchouc, et d'une mousse de chlorure de polyvinyle.

**5.** Procédé selon la revendication 1, dans lequel la mousse de polyuréthane a une densité de 8 à 50 kg/m3, telle que déterminée selon GB9891-1988.

**6.** Procédé selon la revendication 1, dans lequel l'élément composite contenant une charge de matériau polymère est : un corps de porte, un panneau de construction isolant, un corps de porte et un corps de réservoir d'un équipement de réfrigération et d'isolation, un corps de réservoir d'un véhicule frigorifique, un corps de réservoir d'un conteneur frigorifique, ou un élément isolant d'une unité frigorifique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Kunststoffhandbuch, Volume 7, Polyurethanes. Carl Hanser-Verlag, 1993, vol. 7